# EUROPEAN PATENT APPLICATION

(11) **EP 2 060 970 A1**
(43) Date of publication of application: **20.05.2009**
(21) Application number: 07120520.7
(22) Date of filing: 12.11.2007
(51) Int. Cl.: G06F 3/048

(54) **User interface for touchscreen device**

(71) Applicant: Research In Motion Limited, Waterloo, Ontario N2L 3W8 (CA)
(72) Inventor: Vymenets, Leonid Leon, Thornhill Ontario L3T 3L4 (CA); Hosein, Safiyya, Parkland, FL 33076 (US); Ng, Oliver, Mississauga Ontario L5R 3M4 (CA)
(74) Representative: Rickard, David John

(57) **Abstract**

A free-flowing user interface for a touchscreen device of a mobile electronic device provides touch-sensitive application icons and a touch-sensitive hotspot having an optional activation radius surrounding the hotspot. A user can launch a selected application by touching the hotspot and then touching and dragging the application icon corresponding to the selected application onto the hotspot or at least partially into the activation radius surrounding the hotspot. Alternatively, an application can be launched by dragging the hotspot and its surrounding activation zone such that the hotspot or activation zone at least partially overlaps the application icon of the application to be launched. The free-flowing interface can be optionally enhanced by displacing icons onscreen, when dragged or when collisions occur between icons, based on at least one of a virtual inertia parameter, a virtual friction parameter and a virtual collision-elasticity parameter to create more realistic onscreen motion for the icons.

## Description

The present disclosure relates generally to mobile or handheld electronic devices having small liquid crystal display (LCD) screens and, in particular, to handheld devices having touch-sensitive displays or touchscreens.

A number of different touchscreen technologies (e.g. resistive, capacitive, surface acoustic wave, infrared, strain gauge, optical imaging, dispersive signal, acoustic pulse recognition) can be used to produce a touch-senstive graphical user interface that is capable of simultaneously displaying content to the user while receiving user input from the user's finger(s) or stylus. These touchscreen devices (also known as "touch-sensitive displays" or "touchscreen panels") are increasingly popular in consumer electronics such as GPS navigation units, digital video recorders, and wireless handheld devices, to name but a few applications. Touchscreen devices can thus be used to either replace or merely supplement other, more conventional user input devices such keyboards, keypads, trackballs, thumbwheels, mice, etc. Touchscreen devices act simulatenously as display screens and user input devices enabling a variety of functions such as, for example, entering data on virtual keyboards or keypads presented onscreen, bringing down menus, making selections from displayed buttons or menu items, or launching applications, e.g. by tapping or double-tapping an icon displayed onscreen.

One shortcoming of the touchscreen is that it is devoid of any tactile reference points to guide the user's fingers. Unlike a conventional keyboard or keypad, for example, the perfectly flat touchscreen does not have any upwardly protruding keys that help the user feel his or her way around the keyboard, to thus supplement one's visual perception of the location of the keys. Consequently, touchscreens may be prone to false selections and typing errors. Furthermore, if the device is carried in a user's pocket without a suitable cover or case, then the device is susceptible to receiving unwanted input which could, for instance, inadvertently trigger a phone call or unwittingly launch an application. Applicant discloses in the following sections a new interface technology that is not only a technical solution to these foregoing problems, but also revolutionizes the manner in which the user interacts with touchscreen interfaces on handheld mobile electronic devices. The present technology generally provides an innovative user interface for a touchscreen device that revolutionizes the manner in which the user interacts with touchscreen interfaces. This new technology may provide a radically new user experience which is believed to be more intuitive, ergonomic and "free-flowing" than prior-art interfaces. This new touchscreen interface may make use of a touch-sensitive "hotspot" and its (optional) surrounding (touch-sensitive) activation zone for launching applications or performing other tasks or operations relative to onscreen icons. The hotspot (and its optional surrounding activation zone) can be used in a variety of manners to launch an application (or indeed to perform any other sort of onscreen manipulation of icons). For example, and as will be elaborated below, the hotspot can be touched or "tapped" (to activate the hotspot) and then a desired touch-sensitive application icon can be dragged onto the hotspot, or at least partially into the activation zone, so as to launch the application. As another example, the hotspot and the application icon can be touched either sequentially or simultaneously. As a further example, the hotspot can be dragged onto an application icon. The hotspot thus functions to preclude (or at least significantly limit) the prospects of unwittingly triggering an application (when the device is carried in one's pocket, for example, without a suitable cover) or erroneously triggering the wrong application (due to the slip of one's finger).

As an additional refinement to this technology, the ergonomics and performance of the touchscreen interface can be refined by modulating the onscreen motion behaviour of the icons when they are dragged across the screen. By attributing virtual properties of inertia, friction, and collision elasticity, for example, the icons can be made to exhibit realistic accelerations and decelerations when dragged, to undergo virtual collisions with other icons (thus displacing other icons), and to generally exhibit onscreen kinematics that create the desired onscreen ergonomics.

Accordingly, an aspect of the present technology may be a method of launching an application using a touchscreen of a mobile electronic device. The method includes steps of touching a touch-sensitive hotspot displayed on the touchscreen of the mobile electronic device, and touching a touch-sensitive application icon displayed on the touchscreen of the mobile electronic device in order to launch the application.

Another aspect of the present technology may be a computer program product that includes code adapted to perform the steps of the foregoing method when the computer program product is loaded into memory and executed on a processor of a wireless communications device.

Yet another aspect of the present technology may be a mobile electronic device comprising a memory operatively connected to a processor for storing and executing an application, and a touchscreen for displaying both a touch-sensitive application icon corresponding to the application and a touch-sensitive hotspot having an onscreen area that is to be touched in association with a touching of the application icon in order to enable the application icon for launching the application. Unless the hotspot is touched concurrently with the touching of the application icon corresponding to the application to be launched, the application icon remains unenabled, for example, locked, i.e. it cannot be launched by touching it without also touching the hotspot. Touching the hotspot concurrently with the application icon may comprise touching the hotspot and then touching the application icon or touching the application icon and then touching the hotspot. Or it may comprise touching both the hotspot and application icon simultaneously although, in practice, a touch on one of said hotspot and application icon will likely register fractionally before a touch on the other of the hotspot and the application icon. In any case, preferably, touching of one of the hotspot or application icon almost immediately precedes touching of the other of the hotspot or the application icon, i.e. occurs within a short time, for example a pre-determined threshold time, otherwise the 'concurrent' touching of the hotspot and application icon is not registered by the device. The use of a predetermined threshold eliminates spurious application launching where one of the hotspot and application icon are touched and then some time later (after expiry of the threshold) the other of the hotspot and application icon are touched. The hotspot thus functions as a safety mechanism preventing undesired triggering of an application by keeping onscreen application icons locked, i.e. the hotspot functions as an icon-locking and icon-unlocking device that requires the user to touch the hotspot in association with an application icon in order to unlock onscreen icons. Touching of the hotspot thus prepares, readies or enables the application icons onscreen to be launched by being touched or tapped. As will be appreciated, dragging an icon onto the hotspot or its optional surrounding activation zone or dragging the hotspot or its optional surrounding activation zone onto an application icon is equivalent to concurrently or simultaneously touching the hotspot and the application icon.

### GENERAL

The present technology generally provides an innovative user interface for a touchscreen device that revolutionizes the manner in which the user interacts with touchscreen interfaces. This new technology may provide a radically new user experience which is believed to be more intuitive, ergonomic and "free-flowing" than prior-art interfaces.
This new touchscreen interface may make use of a touch-sensitive "hotspot" and its (optional) surrounding (touch-sensitive) activation zone for launching applications or performing other tasks or operations relative to onscreen icons. The hotspot (and its optional surrounding activation zone) can be used in a variety of manners to launch an application (or indeed to perform any other sort of onscreen manipulation of icons). For example, and as will be elaborated below, the hotspot can be touched or "tapped" (to activate the hotspot) and then a desired touch-sensitive application icon can be dragged onto the hotspot, or at least partially into the activation zone, so as to launch the application. As another example, the hotspot and the application icon can be touched either sequentially or simultaneously. As a further example, the hotspot can be dragged onto an application icon. The hotspot thus functions to preclude (or at least significantly limit) the prospects of unwittingly triggering an application (when the device is carried in one's pocket, for example, without a suitable cover) or erroneously triggering the wrong application (due to the slip of one's finger).

As an additional refinement to this technology, the ergonomics and performance of the touchscreen interface can be refined by modulating the onscreen motion behaviour of the icons when they are dragged across the screen. By attributing virtual properties of inertia, friction, and collision elasticity, for example, the icons can be made to exhibit realistic accelerations and decelerations when dragged, to undergo virtual collisions with other icons (thus displacing other icons), and to generally exhibit onscreen kinematics that create the desired onscreen ergonomics.

Accordingly, an aspect of the present technology may be a method of launching an application using a touchscreen of a mobile electronic device. The method may comprise steps of touching a touch-sensitive hotspot displayed on the touchscreen of the mobile electronic device, and touching a touch-sensitive application icon displayed on the touchscreen of the mobile electronic device in order to launch the application.

Another aspect of the present technology may be a computer program product that includes code adapted to perform the steps of the foregoing method when the computer program product is loaded into memory and executed on a processor of a wireless communications device.

Yet another aspect of the present technology may be a mobile electronic device comprising a memory operatively connected to a processor for storing and executing an application, and a touchscreen for displaying both a touch-sensitive application icon corresponding to the application and a touch-sensitive hotspot having an onscreen area that is to be touched in association with a touching of the application icon in order to enable the application icon for launching the application. Unless the hotspot is touched concurrently with the touching of the application icon corresponding to the application to be launched, the application icon may remain unenabled, for example, locked, i.e. it cannot be launched by touching it without also touching the hotspot. Touching the hotspot concurrently with the application icon may comprise touching the hotspot and then touching the application icon or touching the application icon and then touching the hotspot. Or it may comprise touching both the hotspot and application icon simultaneously although, in practice, a touch on one of said hotspot and application icon will likely register fractionally before a touch on the other of the hotspot and the application icon. In any case, preferably, touching of one of the hotspot or application icon almost immediately precedes touching of the other of the hotspot or the application icon, i.e. occurs within a short time, for example a pre-determined threshold time, otherwise the 'concurrent' touching of the hotspot and application icon is not registered by the device. The use of a predetermined threshold may eliminate spurious application launching where one of the hotspot and application icon are touched and then some time later (after expiry of the threshold) the other of the hotspot and application icon are touched. The hotspot thus may function as a safety mechanism preventing undesired triggering of an application by keeping onscreen application icons locked, i.e. the hotspot functions as an icon-locking and icon-unlocking device that requires the user to touch the hotspot in association with an application icon in order to unlock onscreen icons. Touching of the hotspot thus may prepare, ready or enable the application icons onscreen to be launched by being touched or tapped. As will be appreciated, dragging an icon onto the hotspot or its optional surrounding activation zone or dragging the hotspot or its optional surrounding activation zone onto an application icon is equivalent to concurrently or simultaneously touching the hotspot and the application icon.

### BRIEF DESCRIPTION OF THE DRAWINGS

Features and advantages of the present technology will become apparent from the following detailed description, taken in combination with the appended drawings, in which:

FIG. 1 schematically depicts a wireless communications device as an example of a mobile electronic device on which the present technology can be implemented;

FIG. 2 schematically depicts a novel touch-sensitive user interface in accordance with implementations of the present technology, shown integrated, by way of example, into a mobile electronic device, which is illustrated in stippled lines;

FIG. 3 schematically depicts an enlarged view of the novel touch-sensitive user interface;

FIG. 4 schematically depicts one manner of operating the novel interface using two fingers (e.g. index and middle fingers) of the same hand (dubbed the "V-shaped combo") wherein the user touches the hotspot and then drags the icon onto the hotspot or at least partially within an activation radius surrounding the hotspot;

FIG. 5 schematically depicts another manner of operating the novel interface using two hands (e.g. left hand index finger and right hand thumb) in a technique dubbed the "two-hand combo" wherein the right hand thumb touches the hotspot and the index finger of the left hand is used to drag the icon onto the hotspot or at least partially within an activation radius surrounding the hotspot;

FIG. 6 schematically depicts yet another manner of operating the novel interface using the same finger or the same thumb to "tap and combine" by tapping the hotspot and then dragging the icon onto the hotspot or at least partially into the activation radius surrounding the hotspot;

FIG. 7 schematically depicts yet another manner of launching an application, in this case by dragging the hotspot over the application icon;

FIG. 8 schematically depicts yet another manner of launching an application, in this case by sequentially tapping the hotspot and then tapping the application icon;

FIG. 9 schematically depicts yet another manner of launching an application, in this case by simultaneously touching the hotspot and the application icon;

FIG. 10 schematically depicts a further interface functioning like a submenu from which the user can select various options for the layout and operability of the interface;

FIG. 11 is a flowchart outlining steps of a method of enabling a user of a mobile electronic device to manipulate application icons on a touchscreen of the mobile electronic device in accordance with one implementation of the present technology;

FIG. 12 is a flowchart outlining steps of a method of enabling a user of a mobile electronic device to manipulate application icons on a touchscreen of the mobile electronic device in accordance with another implementation of the present technology;

FIG. 13 is a flowchart outlining steps of a method of enabling a user of a mobile electronic device to manipulate application icons on a touchscreen of the mobile electronic device in accordance with yet another implementation of the present technology; and

FIG. 14 is a flowchart outlining steps of a method of enabling a user of a mobile electronic device to manipulate application icons on a touchscreen of the mobile electronic device in accordance with yet a further implementation of the present technology; and

FIG. 15 schematically depicts onscreen motion behaviour of icons on a touchscreen in accordance with implementations of the present technology.

It will be noted that throughout the appended drawings like features are identified by like reference numerals.

### DESCRIPTION OF PREFERRED EMBODIMENTS

The details and particulars of these aspects of the technology will now be described below, by way of example, with reference to the attached drawings.

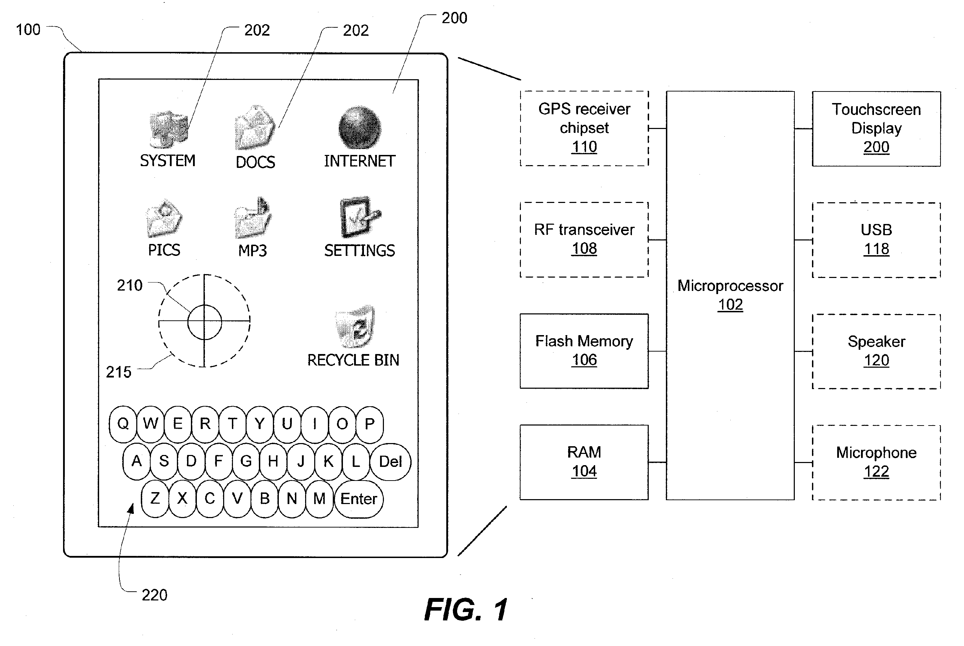

FIG. 1 schematically depicts a wireless communications device 100 as an example of a mobile electronic device on which the present technology can be implemented. As will be readily appreciated, the present technology can be implemented on any mobile electronic device or handheld electronic device that has a touchscreen, such as, for example, a Personal Digital Assistant or "pea" (whether wireless-enabled or not), a GPS navigation unit, a palmtop computer or tablet (whether wireless-enabled or not), an MP3 player, a portable electronic game, etc.

On the right side of FIG. 1 is a block diagram depicting certain key components of the mobile electronic device 100. It should be expressly understood that this figure is intentionally simplified to show only certain components. The device 100 could include other components beyond what is shown in FIG. 1. The device 100 includes a microprocessor 102 (or simply a "processor") which interacts with memory, usually in the form of both RAM 104 and flash memory 106. The processor and memory thus enable various software applications to run on the device. For example, if the device is a wireless communications device, then the processor and memory would cooperate to execute various applications such as e-mail, SMS, instant messaging, Web browsing, mapping, etc. If the device 100 is a wireless communications device, then it would have an RF transceiver 108 for communicating wirelessly with one or more base stations. The RF transceiver 108 is shown in dashed lines to underscore that the mobile electronic device may or may not have this component, i.e. it may or may not be wireless-enabled. Similarly, depending on the precise nature of the device 100, it may or may not include a GPS receiver chipset 110. This GPS component is also shown in dashed lines to underscore that it is optional for the mobile electronic device 100. Also shown in dashed lines are a USB 118 or serial port for connecting to peripheral equipment, a speaker 120 and a microphone 122. The USB, speaker and microphone are optional components, which may or may not be present depending on the type of handheld device.

In accordance with the various implementations of this technology, the mobile electronic device 100 includes a touchscreen display 200 that functions as both a user input device (e.g. keyboard and/or keypad) and a graphical user interface or display screen. The touchscreen 200, or "touch-sensitive display", is a small LCD (Liquid Crystal Display) screen. A number of different touchscreen technologies (e.g. resistive, capacitive, surface acoustic wave, infrared, strain gauge, optical imaging, dispersive signal, acoustic pulse recognition) can be used to produce a touch-senstive graphical user interface that is capable of simultaneously displaying content to the user while receiving user input from the user's finger(s) or stylus. This touchscreen displays visual output for the user and also can present a graphical representation of a keyboard 220, keypad or number pad, as required by the operational context, thereby enabling the user to touch the virtual keys displayed on the screen to make selections or enter data. In addition to the touchscreen, the device may also have a thumbwheel and/or trackball, although, as will be made apparent below, a trackball or thumbwheel would generally be redundant for the main implementations of the present technology because the novel interface enables direct manipulation, dragging and selection of onscreen items such as icons by directly touching these items onscreen, thus enabling the functionality that would ordinarily be performed by a trackball or thumbwheel.

As shown on the left side of FIG. 1, the touchscreen 200 shows various different application icons 202 ("SYSTEM", "DOCS", "INTERNET", "PICS", "MP3", "SETTINGS", "RECYCLE BIN"), which are presented merely for the purposes of illustrating the technology. In other words, these specific icons are used only by way of example as a typical or representative group of application icons. Of course, this technology can be used with icons for other applications (or on an interface having a greater or lesser number of icons).

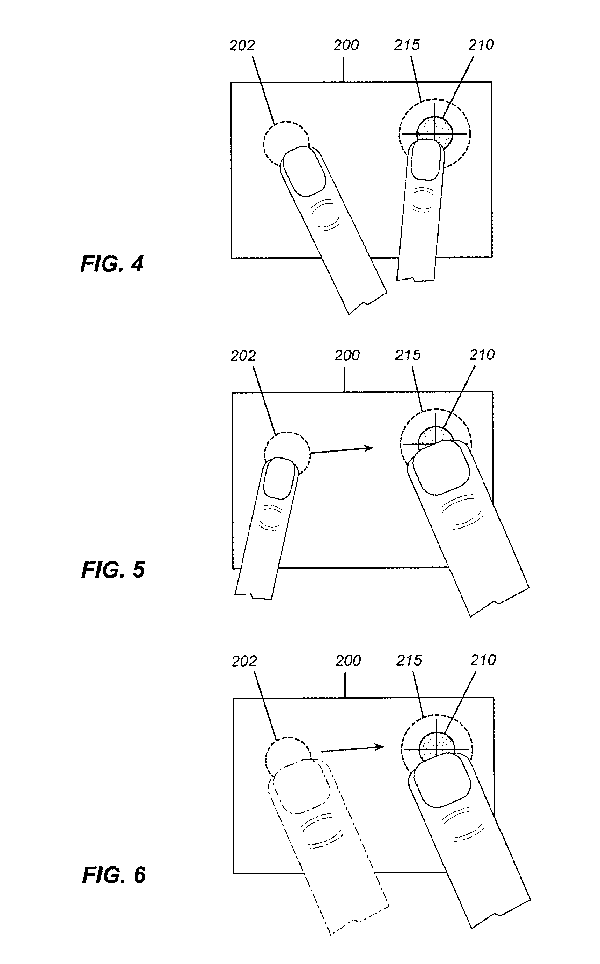

The touchscreen 200 also displays a hotspot 210 which is, as will be elaborated below, either a static or movable onscreen area for activating or "launching" an application, using one of various techniques to be described below. Surrounding the hotspot 210 is an optional activation zone 215. In this case, the activation zone 215 is a concentric annular region surrounding a circular hotspot 210. Other shapes or configurations of hotspots and activation zones can be used (e.g. a square hotspot with an outer square activation zone, an oval hotspot with an oval activation square, a square hotspot with an outer circular activation zone, etc.). However, an annular concentric activation zone is the preferred shape for ergonomic and aesthetic reasons. For the purposes of nomenclature, when the activation zone is annular, as depicted in FIG. 1, it is said to define an "activation radius" within which an application icon can be at least partially dragged into an overlapping relationship to thereby activate or launch the application corresponding to the application icon. Instead of dragging the application icon to at least partially overlap the activation zone (or activation radius for the circular hotspot), a number of other different techniques can be used in connection with the hotspot in order to launch an application, as will be disclosed below in conjunction with FIGS. 4-9.

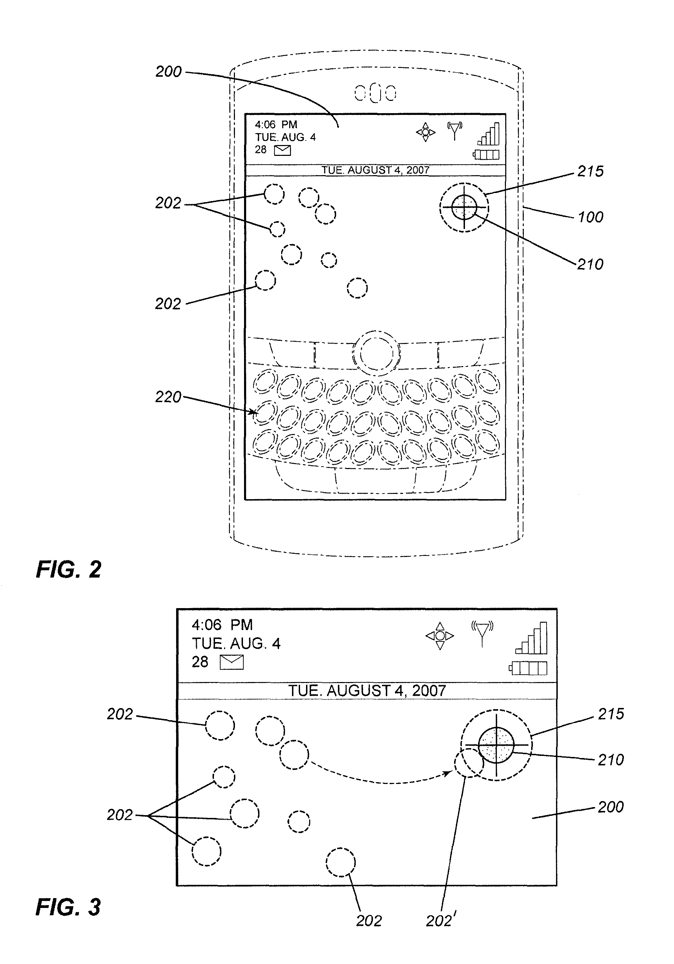

FIG. 2 schematically depicts another wireless communications device 100 having a touchscreen 200, similar to the device depicted schematically on the left side of FIG. 1. In FIG. 2, however, the hotspot 210 (and its optional surrounding activation radius 215) is displayed at the top right of the touchscreen 200 as opposed to the middle/central position shown in FIG. 1. This illustrates that the hotspot 210 (and its optional surrounding activation radius 215) can be positioned in any desirable onscreen location. In one implementation, the hotspot 210 and its optional activation radius 215 are positioned in a fixed location based on system configuration or user settings. In another implementation, the hotspot and its optional activation radius are movable (in unison) around the screen, either as a result of direct manipulation by the user or "automatically" as a result of intelligent, adaptive repositioning based on dynamically observed usage patterns (e.g. which icons tend to be selected most frequently). In FIG. 2, the application icons 202 are represented by generic circles to underscore that this technology can be applied to any type of icon or any sort of application. These icons can be laid out or arranged in aligned rows and columns (for a neat and tidy onscreen appearance) or they can be "free-floating" (disordered) based on virtual collisions, user manipulations or interactions. Again, the arrangement of the icons onscreen (as their default position when the system boots up or when the main screen is revisited) is subject to user preferences and configurations. The layout of icons as well as their onscreen motion behaviour will be described in greater detail below.

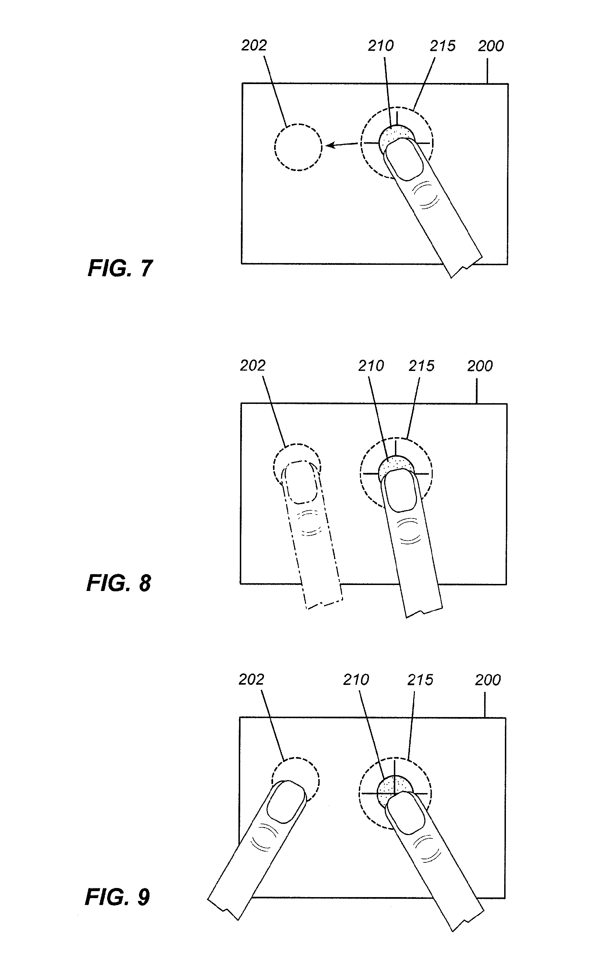

FIG. 3 schematically depicts an enlarged view of the novel touch-sensitive user interface shown in FIG. 2. As was shown in FIG. 2, the touchscreen 200 displays a plurality of application icons 202, the hotspot 210 with its (optional) surrounding activation zone 215 (i.e. its activation radius for the particular case of a circular hotspot and an annular activation zone). FIG. 3 presents a general technique for using the hotspot to launch an application. This general technique, as illustrated in this figure, involves dragging an application icon 202' to at least partially overlap the activation radius 215 of the hotspot 210. Variations on this technique will be described below with reference to FIGS. 4-6 which show three specific techniques for dragging an icon to the hotspot (or its activation zone). Other techniques (which involve dragging the hotspot and its optional activation radius to at least partially overlap an application icon or merely touching either concurrently or sequentially the hotspot and the icon) will be described with reference to FIGS. 7-9. These various techniques illustrate the versatility of the hotspot and activation zone. While the techniques shown in FIGS. 4-9 represent the main ways of activating or launching an application using this novel touch-sensitive interface 200, it should be understood that variations on these techniques can be readily devised to take advantage of the unique onscreen ergonomics offered by the hotspot 210 and its optional surrounding activation zone 215.

FIG. 4 schematically depicts one manner of operating the novel interface using two fingers (e.g. index and middle fingers) of the same hand (this technique being dubbed the "V-shaped combo") wherein the user touches the hotspot 210 and then drags the icon 202 onto the hotspot 210 (if space permits) or at least partially within an activation radius 215 surrounding the hotspot 210.

FIG. 5 schematically depicts another manner of operating the novel interface using two hands (e.g. left hand index finger and right hand thumb) in a technique dubbed the "two-hand combo" wherein the right hand thumb touches the hotspot 210 and the index finger of the left hand is used to drag the icon 202 onto the hotspot 210 or at least partially within an activation radius 215 surrounding the hotspot 210.

As will be observed, FIGS. 4 and 5 present two related techniques for launching a selected application by touching the hotspot 210 and, while the hotspot 210 is still being touched, touching and dragging the application icon 202 at least partially into an activation zone 215 surrounding the hotspot 210 that is being touched.

FIG. 6 schematically depicts yet another manner of operating the novel interface using the same finger or the same thumb to "tap and combine" by tapping the hotspot 210 and then dragging the icon 202 onto the hotspot 210 or at least partially into the activation radius 215 surrounding the hotspot 210. In this "tap and combine" technique, an application is launched by first touching and releasing (i.e. "tapping") the hotspot 210 and then touching and dragging the application icon 202 for the selected application at least partially onto the hotspot 210 itself or, alternatively, dragging the icon 202 so that it overlaps at least partially with the activation radius 215 surrounding the hotspot 210.

FIGS. 7-9, as noted above, depict various other techniques for launching applications which do not require the icon to be dragged. As will elaborated below, these techniques involve dragging the hotspot (FIG. 7), sequentially tapping the hotspot and then the icon (FIG. 8), and concurrently touching the hotspot and icon (FIG. 9).

FIG. 7 schematically depicts in which the hotspot 210 (and its surrounding activation zone 215, if present) are dragged onto an application icon 202 rather than dragging the application icon 202 onto the hotspot or into its activation radius. In other words, the hotspot 210 can be a movable hotspot that can be dragged (along with its optional activation radius 215) so that it overlaps, or at least partially overlaps, the application icon 202 of the application that is to be launched. In one implementation, the application is only launched once the hotspot is released while in an overlapping relationship with a given icon (so as to prevent false selection when the hotspot is dragged over unwanted icons). Alternatively, the hotspot can cause application icons is overlaps to change color to indicate that the application in question can now be triggered, thus requiring the user to tap the hotspot again to actually launch that application.

FIG. 8 schematically depicts yet another manner of launching an application, in this case by sequentially tapping the hotspot 210 and then tapping the application icon 202. As a variant, the user could also touch anywhere within the activation radius of the hotspot (rather than the hotspot itself). This could be configurable by the user to allow a more forgiving operation of the system, which might be preferable for users operating the device in a bumpy environment such as on a commuter train or on a city bus. As a variant, if the device is equipped with a GPS chipset, the velocity of the device can be used to modulate between the hotspot and the activation radius. In other words, if the GPS chipset recognizes that the device is travelling faster than a minimal velocity threshold, for example, a 20 km/h, then the device presumes that the user is operating the device in a potentially bumpy or swaying vehicle, where a more forgiving hotspot would be desirable. In that case, for example, the hotspot could either automatically enlarge itself or simply include its activation zone as part of the onscreen area for receiving touch input for the purposes of this "sequential tap technique".

FIG. 9 schematically depicts yet another manner of launching an application, in this case by simultaneously touching the hotspot and the application icon. As was the case with the sequential tap technique, the device can implement this concurrent/simultaneous touch technique by requiring input precisely on the hotspot itself or anywhere within its activation radius. Also as noted above, the target area (hotspot or activation radius) for receiving input can be controlled based on GPS-determined velocity readings, if desired.

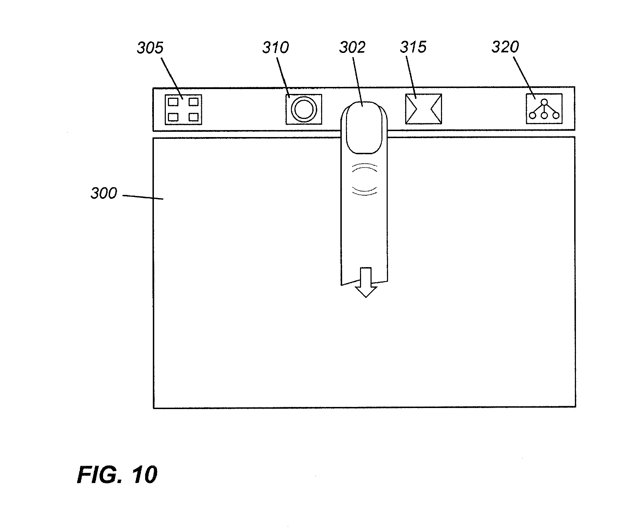

FIG. 10 schematically depicts a further interface 300 functioning like a submenu from which the user can select various options for the layout and operability of the interface. This figure shows, by way of example, a slider 302 which, with a downward motion of the user's finger, causes the selection bar to slide down, revealing navigational options relating to, for example, icon layout 305, volume (for MP3 or phone) 310, "Siamese Flow" 315 (which is a term coined by applicant to describe the novel interface in accordance with the present technology), and a drag-and-drop function 320 for dragging and dropping applications or files into a system of hierarchically arranged folders.

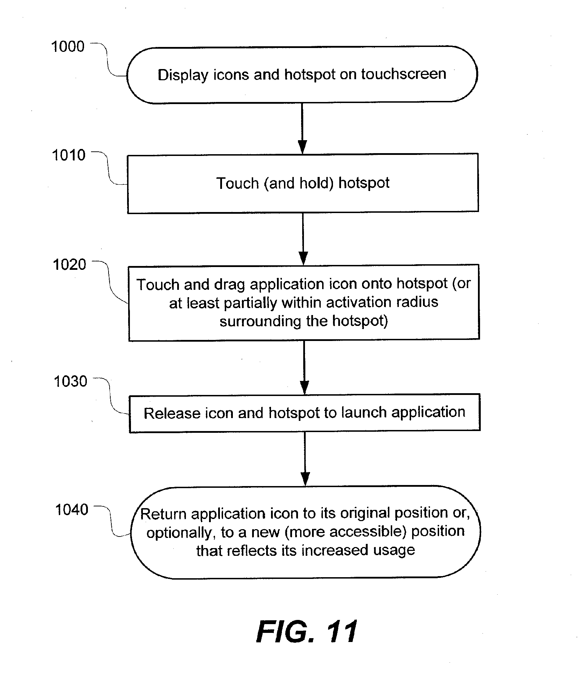

FIGS. 11-14 are four flowcharts outlining steps in four respective related methods of launching an application using a touchscreen of a mobile electronic device. In general, the method comprises steps of (i) touching a touch-sensitive hotspot 210 displayed on the touchscreen 200 of the mobile electronic device 100; (ii) and touching a touch-sensitive application icon 202 displayed on the touchscreen 200 of the mobile electronic device 100 in order to launch the application.

FIG. 11 is a flowchart outlining steps of a first method of activating an application. This is the general "touch and drag" technique. As a first step 1000, the touchscreen displays the icons 202 and the hotspot 210 (with or without its activation radius 215). Subsequently, at step 1010, the user chooses an icon and touches (i.e. depresses and holds down) the hotspot 210. While still pressing/touching the hotspot, the user, at step 1020, touches and drags the application icon onto the hotspot (or at least partially within the activation radius surrounding the hotspot). Once the icon is at least partially overlapping the activation radius or the hotspot, the user releases the icon (step 1030) which causes the application to launch. At step 1040, the application icon is either returned to its original position or it is moved away from the hotspot to a new more accessible position that reflects its increased usage. The former is a "spring back interface" which causes selected icons to "spring back", or return, to their respective original positions. The latter is an "adaptive interface" that dynamically updates its layout (the relative position of its icons) depending on recent usage patterns (frequency of selection of the icons).

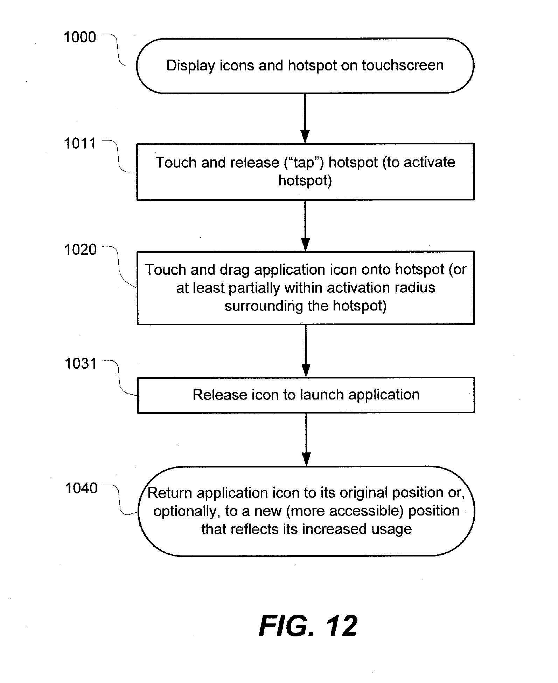

FIG. 12 is a flowchart presenting a variation on the method presented in FIG. 11. FIG. 12 shows the tap and drag technique. In step 1000, as in FIG. 11, the device displays its icons 202 and hotspot 210 on the touchscreen. At new step 1011, however, the user touches and releases ("taps") the hotspot to activate it. At step 1020, the user touches and drags the application icon onto the hotspot (or at least partially within the activation radius surrounding the hotspot). At step 1031, the user releases the icon to launch the application. At step 1040, as explained before, the application icon is either returned to its original position or repositioned in a new, more accessible position that reflects its increased usage.

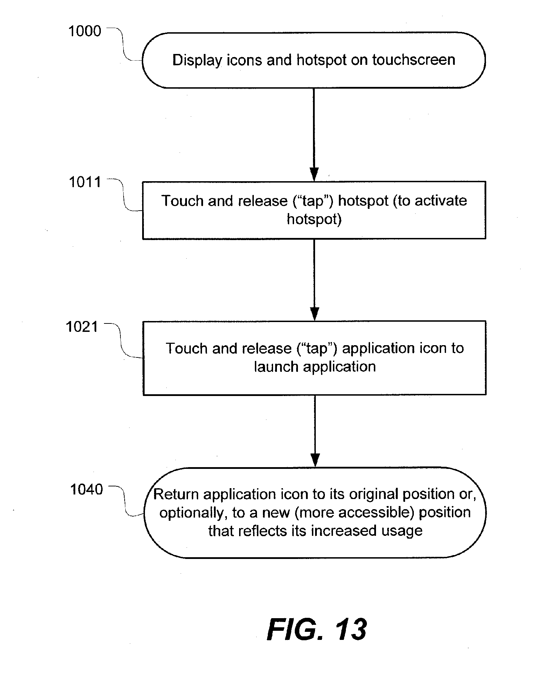

FIG. 13 is another flowchart presenting another variation on the methods presented in FIGS. 11 and 12. This is the sequential tap technique. After displaying icons and the hotspot on the touchscreen (at step 1000), the method entails receiving user touch input on the hotspot in the form of a brief touch or "tap". In other words, the user taps (touches and releases) the hotspot (to activate it), at step 1011, and then touches and releases ("taps") the application icon to launch the application (step 1021). Thereafter, as in the other methods, the interface returns the application icon to its original position or optionally repositions it in a new position that reflects its increased usage.

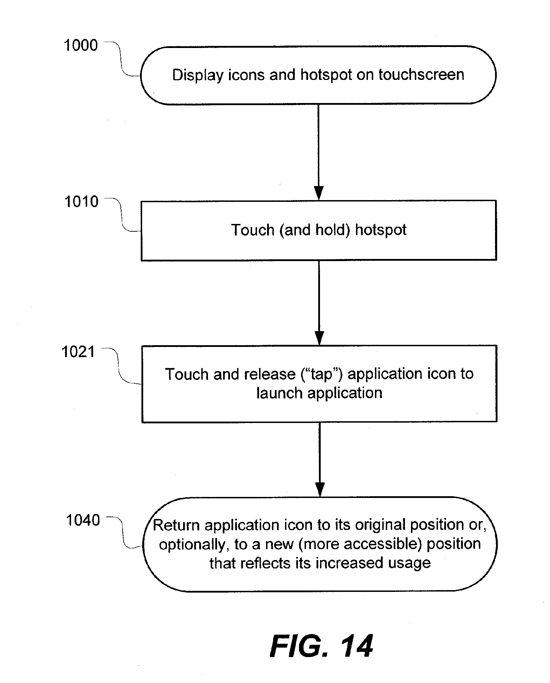

FIG. 14 is another flowchart presenting a variation on the methods presented in FIGS. 11-13. This technique is the concurrent touch technique requiring that the user touch the hotspot and while holding the hotspot also touch or tap the application icon for the application to be launched. After step 1000 of displaying the icons and hotspot, step 1010 involves the user touching and holding the hotspot. Before the user releases the hotspot, i.e. while the hotspot is still being touched, the user touches (or taps) the application icon to thus launch the application (at step 1021). At step 1040, as described above, the application icon can be returned to its original position or repositioned to a new more accessible onscreen location to reflect its increased frequency of use.

As will be apparent from the foregoing, the present technology provides an innovative hotspot (and optional activation zone) that enables users of touchscreen devices to manipulate icons and launch applications in a more ergonomic fashion.

As a refinement to this present technology, the onscreen motion behaviour of the icons (and optionally also of the hotspot for cases where the hotspot and activation radius are movable) can be modulated or controlled in order to create more "realistic" onscreen motion. Although in one implementation, a purely "free-flowing" interface can be provided, in another implementation it may be more ergonomic for the user to limit the motion of icons so that wild, rapid movements are modulated or "toned down". By imbuing the icons with virtual dynamic properties such as virtual friction, virtual collision-elasticity and virtual inertia, as if the icons were actual masses movable onscreen subject to real-life dynamic and kinematic behaviour, the overall user experience can be greatly enhanced. In other words, by constraining and limiting the motion (e.g. acceleration and deceleration) of the icons, at least virtually, the onscreen motion of icons appears to be much more realistic, thus improving the user experience.

In one implementation, therefore, the application icons 202 are given a virtual inertia (i.e. a mass-like parameter) for limiting onscreen acceleration and deceleration of the application icons when dragged. The inertia of all icons can be equal, or some icons can be given greater or lesser inertia depending on their size or importance. In another implementation, this inertia property of each application icon 202 can also be used to simulate onscreen collisions. In other words, the inertia property of each icon can be used to cause reactive displacement of other onscreen application icons when onscreen collisions occur.

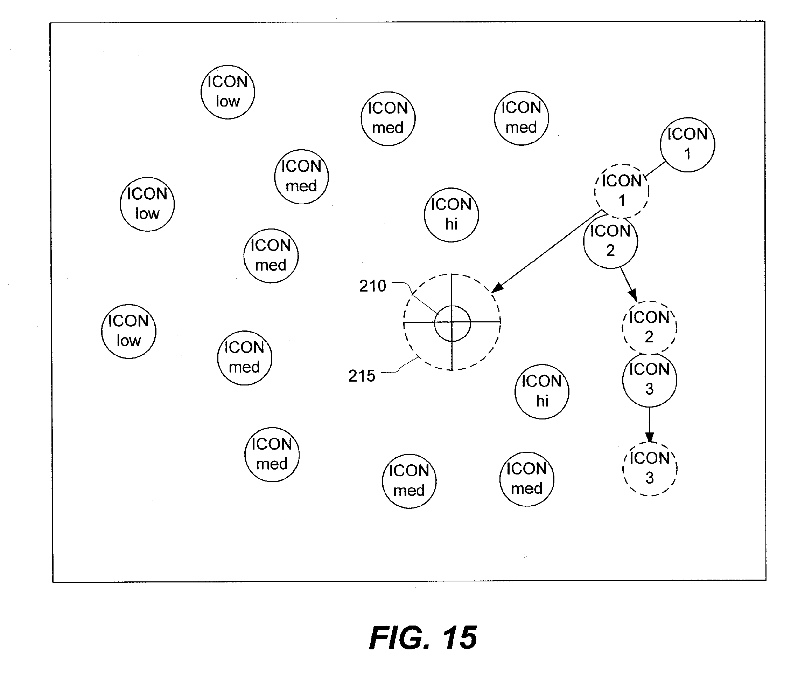

As depicted by way of example in FIG. 15, when ICON 1 is dragged toward the hotspot 210 and surrounding activation zone 215, ICON 1 collides with ICON 2, thus causing (virtually) an elastic or inelastic collision (i.e. a collision that is simulated as either involving no loss of energy or one involving a loss of energy, depending on the device's settings). As a consequence, ICON 2 is bumped or displaced. The displacement of ICON 2 is computed by applying Newtonian mechanics to the inelastic collision, taking into account (i) the relative "masses" (inertia parameter) of ICON 1 and ICON 2, (ii) the onscreen velocity of ICON 1 at the moment of the collision (which thus determines the virtual momentum of ICON 1), (iii) the elasticity of the collision (i.e. how much energy is dissipated during the collision), (iv) and the amount of virtual friction that acts to decelerate ICON 2 to a standstill.

Thus, when a user drags an icon such as ICON 1 into a collision with another icon, e.g. ICON 2, as shown in FIG. 15, the bumped icon (ICON 2) may, in turn, be sufficiently displaced so as to bump into (i.e. collide with) another icon, in this example, ICON 3. ICON 3 would also be displaced by virtue of the transfer of virtual momentum. Thus, the dragging of an icon toward the hotspot along a path that collides with other icons may cause (if this onscreen effect is enabled for the interface) other icons to be displaced. Depending on the friction parameter, this might create a visual "billiard ball" effect as various icons are bumped during dragging of an icon, which in turn causes a chain reaction of other collisions. Some users might find this billiard ball effect entertaining while others a bit disconcerting. So to avoid what a "dizzying" billiard ball effect, the friction parameter and/or the collision elasticity parameter can be set high so that collisions cause very limited displacement of bumped icons. In other words, by heavily "dampening" the displacement after collisions, the chain reaction of collisions (the so-called billiard ball effect) is stifled.

Attributing a virtual friction parameter, virtual collision-elasticity parameter or inertia parameter to each icon thus enhances the user experience by making the interface respond more realistically to user input.

As further shown in FIG. 15, the plurality of application icons can optionally be arranged onscreen such that application icons corresponding to applications that are frequently launched (the icons labelled "ICON hi") are disposed closest to the hotspot to enable greatest accessibility to the hotspot while application icons corresponding to applications that are infrequently launched (the icons labelled "ICON low") are disposed farthest from the hotspot. Application icons that are neither frequently nor infrequently used ("medium" usage applications), which are, in this figure, labelled as "ICON med" are disposed or arranged at a middle distance from the hotspot, thus providing these "middle icons" with medium accessibility to the hotspot.

As a default layout, e.g. when the device is turned on, the icons can be arranged in concentric bands around a centrally disposed hotspot. The onscreen icons are prioritized according to recent usage or based on preconfigured user settings. Alternatively, if the hotspot is disposed on one side of the interface, then the icons can be arranged in lines with the closest line of icons being those most frequently used and the furthest line of icons being those least frequently used. Other arrangements can of course be used.

As noted earlier, after the device boots up, the interface can present an ordered (initial or default) layout of icons, or alternatively, the interface can present the icons as they were previously disposed when the device was last turned off. Regardless, the icons can then be dynamically reorganized based on ongoing usage and can also be repositioned due to collisions (if the collision-simulation feature is enabled). Likewise, it should be appreciated that the various dynamic properties (friction, inertia, collision-elasticity) can be enabled or disabled by the user to achieve the desired onscreen user experience.

The foregoing method steps can be implemented as coded instructions in a computer program product. In other words, the computer program product is a computer-readable medium upon which software code is recorded to perform the foregoing steps when the computer program product is loaded into memory and executed on the microprocessor of the mobile electronic device.

This new technology has been described in terms of specific implementations and configurations which are intended to be exemplary only. The scope of the exclusive right sought by the Applicant is therefore intended to be limited solely by the appended claims.

## Claims

1. A mobile electronic device comprising:
a memory operatively connected to a processor for storing and executing an application; and
a touchscreen for displaying both a touch-sensitive application icon corresponding to the application and a touch-sensitive hotspot having an onscreen area that is to be touched in association with a touching of the application icon in order to enable the application icon for launching the application.

2. The mobile electronic device as claimed in claim 1 wherein the touchscreen further comprises an activation zone surrounding the hotspot and the application icon is adapted to be dragged to at least partially overlap the activation zone in order to launch the application.

3. The mobile electronic device as claimed in claim 1 wherein the hotspot comprises a movable hotspot that is adapted to be dragged at least partially onto the application icon and then released to launch the application corresponding to the application icon.

4. The mobile electronic device as claimed in claim 1 wherein the hotspot comprises a movable hotspot that is adapted to be dragged with a surrounding activation zone so that the activation zone at least partially overlaps the application icon for launching the application.

5. The mobile electronic device as claimed in claim 1 wherein the hotspot comprises a circular hotspot around which an annular activation zone is concentrically disposed to define an activation radius and one or more application icons are adapted to be dragged within said activation zone for activation of respective applications.

6. The mobile electronic device as claimed in any one of the preceding claims wherein the touchscreen is arranged such that a plurality of application icons is arranged onscreen such that application icons corresponding to applications that are frequently launched are disposed closest to the hotspot to enable greatest accessibility to the hotspot while application icons corresponding to applications that are infrequently launched are disposed farthest from the hotspot.

7. The mobile electronic device as claimed in any one of the preceding claims wherein the application icon is arranged to exhibit a virtual inertia limiting onscreen acceleration and deceleration of the application icon when dragged.

8. The mobile electronic device as claimed in any one of the preceding claims wherein each of a plurality of application icons displayed onscreen is arranged to exhibit a virtual inertia limiting onscreen acceleration and deceleration of the application icon when dragged and furthermore causing reactive displacement of other onscreen application icons when onscreen collisions occur.

9. The mobile electronic device as claimed in claim 8 wherein each of the application icons is arranged to exhibit a virtual friction parameter and a virtual collision-elasticity parameter for limiting the motion of onscreen icons that are subjected to onscreen collisions.

10. The mobile electronic device as claimed in any one of the preceding claims, wherein the hotspot is arranged such that touching it unlocks the application icon to enable said icon to launch the application.

11. A method of launching an application using a touchscreen of a mobile electronic device, the method comprising steps of:
touching a touch-sensitive hotspot displayed on the touchscreen of the mobile electronic device, the hotspot having an onscreen area that is touched in association with a touching of the application icon in order to enable the application icon to launch the application; and
touching a touch-sensitive application icon displayed on the touchscreen of the mobile electronic device in order to launch the application.

12. The method as claimed in claim 11 wherein the application is launched by first touching and releasing the hotspot and then touching and dragging the application icon for the selected application at least partially onto the hotspot.

13. The method as claimed in claim 11 wherein the selected application is launched by touching the hotspot and, while the hotspot is still being touched, touching and dragging the application icon at least partially into an activation zone surrounding the hotspot that is being touched.

14. The method as claimed in claim 11 wherein the selected application is launched by touching and releasing the hotspot and then touching the application icon.

15. The method as claimed in claim 11 wherein the selected application is launched by touching the hotspot, and while the hotspot is still being touched, touching the application icon.

16. The method as claimed in claim 11 wherein the step of touching the touch-sensitive hotspot comprises dragging the hotspot to at least partially overlap the application icon to thereby launch the application.

17. The method as claimed in claim 11 wherein the step of touching the touch-sensitive hotspot comprises dragging the hotspot so that an activation zone surrounding, and movable with, the hotspot at least partially overlaps the application icon to thereby cause the application to launch.

18. The method as claimed in any one of claims 11 to 17 wherein a plurality of application icons are arranged onscreen such that application icons corresponding to applications that are more frequently launched have more direct access to the hotspot than application icons corresponding to applications that are less frequently launched.

19. The method as claimed in any one of claims 11 to 18 further comprising a step of configuring at least one of a virtual inertia parameter, a virtual friction parameter and a virtual collision-elasticity parameter in order to control motion behaviour of the onscreen application icons when the icons are dragged or when the icons collide onscreen.

20. The method as claimed in any one of claims 11 to 19, wherein touching the hotspot unlocks the application icon to enable it to launch the application.

21. A machine readable medium containing code which, when loaded into memory and executed on a processor of a mobile electronic device, causes said mobile electronic device to perform the steps of the method of any one of claims 11 to 20.

22. A computer program product comprising the machine readable medium as claimed in claim 21.

## Amended claims

### Amended claims in accordance with Rule 137(2) EPC.

**1.** A mobile electronic device (100) comprising:
a memory (104) operatively connected to a processor (102) for storing and executing an application; and
a touchscreen (200) for displaying both a touch-sensitive application icon (202) corresponding to the application and a touch-sensitive hotspot (210) having an onscreen area (215) that is to be touched in association with a touching of the application icon (202) in order to enable the application icon (202) for launching the application.

**2.** The mobile electronic device (100) as claimed in claim 1 wherein the touchscreen (200) further comprises an activation zone (215) surrounding the hotspot (210) and the application icon (202) is adapted to be dragged to at least partially overlap the activation zone (215) in order to launch the application.

**3.** The mobile electronic device (100) as claimed in claim 1 wherein the hotspot (210) comprises a movable hotspot (210) that is adapted to be dragged at least partially onto the application icon (202) and then released to launch the application corresponding to the application icon (202).

**4.** The mobile electronic device (100) as claimed in claim 1 wherein the hotspot (210) comprises a movable hotspot (210) that is adapted to be dragged with a surrounding activation zone (215) so that the activation zone (202) at least partially overlaps the application icon (202) for launching the application.

**5.** The mobile electronic device (100) as claimed in claim 1 wherein the hotspot (210) comprises a circular hotspot (210) around which an annular activation zone (215) is concentrically disposed to define an activation radius and one or more application icons (202) are adapted to be dragged within said activation zone (215) for activation of respective applications.

**6.** The mobile electronic device (100) as claimed in any one of the preceding claims wherein the touchscreen (200) is arranged such that a plurality of application icons (202) is arranged onscreen such that application icons (202) corresponding to applications that are frequently launched are disposed closest to the hotspot (210) to enable greatest accessibility to the hotspot (210) while application icons (202) corresponding to applications that are infrequently launched are disposed farthest from the hotspot (210).

**7.** The mobile electronic device (100) as claimed in any one of the preceding claims wherein the application icon (202) is arranged to exhibit a virtual inertia limiting onscreen acceleration and deceleration of the application icon (202) when dragged.

**8.** The mobile electronic device (100) as claimed in any one of the preceding claims wherein each of a plurality of application icons (202) displayed onscreen is arranged to exhibit a virtual inertia limiting onscreen acceleration and deceleration of the application icon (202) when dragged and furthermore causing reactive displacement of other onscreen application icons (202) when onscreen collisions occur.

**9.** The mobile electronic device (100) as claimed in claim 8 wherein each of the application icons (202) is arranged to exhibit a virtual friction parameter and a virtual collision-elasticity parameter for limiting the motion of onscreen icons (202) that are subjected to onscreen collisions.

**10.** The mobile electronic device (100) as claimed in any one of the preceding claims, wherein the hotspot (210) is arranged such that touching it unlocks the application icon (202) to enable said icon to launch the application.

**11.** A method of launching an application using a touchscreen (200) of a mobile electronic device (100), the method comprising steps of:
touching a touch-sensitive hotspot (210) displayed on the touchscreen (200) of the mobile electronic device (100), the hotspot (210) having an onscreen area that is touched in association with a touching of a touch sensitive application icon (202) displayed on the touchscreen (200) in order to enable the application icon (202) to launch the application; and
touching the application icon (202) of the mobile electronic device (100).

**12.** The method as claimed in claim 11 wherein the application is launched by first touching and releasing the hotspot (210) and then touching and dragging the application icon (202) for the selected application at least partially onto the hotspot (210).

**13.** The method as claimed in claim 11 wherein the selected application is launched by touching the hotspot (210) and, while the hotspot (210) is still being touched, touching and dragging the application icon (202) at least partially into an activation zone (215) surrounding the hotspot (210) that is being touched.

**14.** The method as claimed in claim 11 wherein the selected application is launched by touching and releasing the hotspot (210) and then touching the application icon (202).

**15.** The method as claimed in claim 11 wherein the selected application is launched by touching the hotspot (210), and while the hotspot (210) is still being touched, touching the application icon (202).

**16.** The method as claimed in claim 11 wherein the step of touching the touch-sensitive hotspot (210) comprises dragging the hotspot (210) to at least partially overlap the application icon (202) to thereby launch the application.

**17.** The method as claimed in claim 11 wherein the step of touching the touch-sensitive hotspot (210) comprises dragging the hotspot (210) so that an activation zone (215) surrounding, and movable with, the hotspot (210) at least partially overlaps the application icon (202) to thereby cause the application to launch.

**18.** The method as claimed in any one of claims 11 to 17 wherein a plurality of application icons (202) are arranged onscreen such that application icons (202) corresponding to applications that are more frequently launched have more direct access to the hotspot (210) than application icons (202) corresponding to applications that are less frequently launched.

**19.** The method as claimed in any one of claims 11 to 18 further comprising a step of configuring at least one of a virtual inertia parameter, a virtual friction parameter and a virtual collision-elasticity parameter in order to control motion behaviour of the onscreen application icons (202) when the icons (202) are dragged or when the icons (202) collide onscreen.

**20.** The method as claimed in any one of claims 11 to 19, wherein touching the hotspot (210) unlocks the application icon (202) to enable it to launch the application.

**21.** A machine readable medium containing code which, when loaded into memory (104) and executed on a processor (102) of a mobile electronic device (100), causes said mobile electronic device (100) to perform the steps of the method of any one of claims 11 to 20.

**22.** A computer program product comprising the machine readable medium as claimed in claim 21.
